# DEMANDE DE BREVET EUROPEEN

(11) **EP 1 674 820 A1**
(43) Date de publication de la demande: **28.06.2006**
(21) Numéro de dépôt: 05301100.3
(22) Date de dépôt: 22.12.2005
(51) Int. Cl.: G01B 3/11, G01B 7/02, B65H 75/44

(54) **Dispositif d'entraînement pour capteur à câble**

(30) Priorité: 22.12.2004 FR 0413738
(71) Demandeur: AK INDUSTRIES (Société à Responsabilité Limitée), 67190 DINSHEIM (FR)
(72) Inventeur: Klotz, Roland, 67190, DINSHEIM (FR)
(74) Mandataire: Nuss, Laurent

(57) **Abrégé**

La présente invention concerne un dispositif d'entraînement pour capteur à câble, caractérisé en ce que le tambour (1) est guidé sur l'arbre (5) d'entraînement du codeur par l'intermédiaire d'un flasque (9) faisant partie du moyen (6) de solidarisation en rotation du tambour (1) avec l'arbre (5) d'entraînement du codeur et est relié à ce moyen (6) de solidarisation en rotation par l'intermédiaire du moyen (8) d'entraînement du tambour (1) en translation dans le carter (4), ledit moyen (8) d'entraînement en translation coopérant, d'une part, avec le flasque (9) du tambour (1) et, d'autre part, avec un élément fixe (10) solidaire du carter (4).

L'invention est plus particulièrement applicable à la construction de dispositifs de mesure et de contrôle électromécanique.

## Description

La présente invention concerne la construction des dispositifs de mesure et de contrôle électromécanique généralement mis en oeuvre dans le domaine de la robotique, dans l'équipement des moteurs et des machines outils, notamment pour la mesure de déplacements linéaires au moyen de codeurs incrémentaux rotatifs, et a pour objet un dispositif d'entraînement pour capteur à câble.

Les capteurs de ce type sont destinés à la détermination de déplacements linéaires et à l'incrémentation des données recueillies sous forme d'une rotation d'un nombre correspondant de tours d'un codeur.

De tels capteurs se présentent généralement sous forme d'une partie électromécanique comportant un codeur proprement dit relié à une installation de surveillance et de commande et par un moyen de transmission et de transformation d'un mouvement linéaire à mesurer en un mouvement circulaire, ce moyen de transmission étant relié à l'axe du codeur et étant pourvu d'un dispositif de dévidage et de réenroulement d'un câble relié à l'organe dont le déplacement linéaire est à mesurer et étant logé dans un carter de protection.

Le câble est enroulé, de manière connue, sur un tambour, suivant des spires jointives, ledit tambour étant soumis, pour le réenroulement du câble à une force de rappel en rotation délivrée par un ressort spiral agissant directement sur un axe d'entraînement dudit tambour.

Afin de réaliser un dévidage et un réenroulement parfaitement régulier du câble sur le tambour, il a été proposé différents dispositifs mettant en déplacement ledit tambour, de sorte que le câble est toujours enroulé sur ce dernier ou déroulé de ce dernier au même endroit du carter et peut déboucher dans ou hors de ce dernier de manière parfaitement perpendiculaire par rapport à la génératrice du tambour, ce pour garantir une disposition parfaitement jointive des spires enroulées sur le tambour, sans aucun risque de chevauchement.

A cet effet, il a été proposé notamment par EP-0 778 279 et par US-A-4 443 888 des dispositifs d'entraînement pour capteur à câble, dans lesquels, le tambour est monté sur un axe d'entraînement relié à un codeur, ledit axe étant chargé par un ressort de rappel spiral. Ainsi, lorsque l'organe dont le déplacement à mesurer est mis en mouvement, le câble est tiré à travers une ouverture correspondante du carter et tourne contre l'action du ressort de rappel spiral. Simultanément, le tambour se déplace en translation. A cet effet, le tambour est monté dans le carter de telle manière qu'il puisse se déplacer en translation coaxialement sur l'axe d'entraînement, soit directement sur ledit axe (US-A-4 443 888), soit sur un manchon entourant ledit axe (EP-0 778 239).

Ces dispositifs connus permettent d'assurer un fonctionnement relativement correct des capteurs ainsi équipés. Cependant, leur conception est relativement complexe et nécessite la mise en oeuvre d'un nombre important de pièces mobiles dont un guidage précis et fiable doit être assuré afin de garantir un bon fonctionnement des capteurs.

La présente invention a pour but de pallier ces inconvénients en proposant un dispositif d'entraînement pour capteur à câble permettant d'assurer un guidage parfait du tambour à l'intérieur du carter du dispositif et sur l'axe d'entraînement du capteur tout en étant de construction particulièrement simple et d'un fonctionnement très fiable.

A cet effet, le dispositif d'entraînement pour capteur à câble conforme à l'invention, qui est essentiellement constitué par un tambour d'enroulement d'un câble guidé hors du carter par l'intermédiaire d'une sortie de câble fixe, ledit tambour d'enroulement étant monté dans un carter de protection et guidé dans cc dernier sur un arbre d'entraînement d'un capteur, par un moyen de solidarisation en rotation du tambour d'enroulement avec l'arbre d'entraînement du codeur, ledit arbre d'entraînement coopérant avec un moyen de rappel et par un moyen d'entraînement du tambour en translation dans le carter, est caractérisé en ce que le tambour est guidé sur l'arbre d'entraînement du codeur par l'intermédiaire d'un flasque faisant partie du moyen de solidarisation en rotation du tambour avec l'arbre d'entraînement du codeur et est relié à ce moyen de solidarisation en rotation par l'intermédiaire du moyen d'entraînement du tambour en translation dans le carter, ledit moyen d'entraînement en translation coopérant, d'une part, avec le flasque du tambour et, d'autre part, avec un élément fixe solidaire du carter.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale et en coupe d'un capteur à câble pourvu du dispositif conforme à l'invention ;
la figure 2 est une vue en coupe suivant A-A de la figure 1 ;
la figure 3 est une vue en coupe suivant B-B de la figure 1, et
la figure 4 est une vue partielle en perspective, à plus grande échelle, représentant le fonctionnement du dispositif selon l'invention.

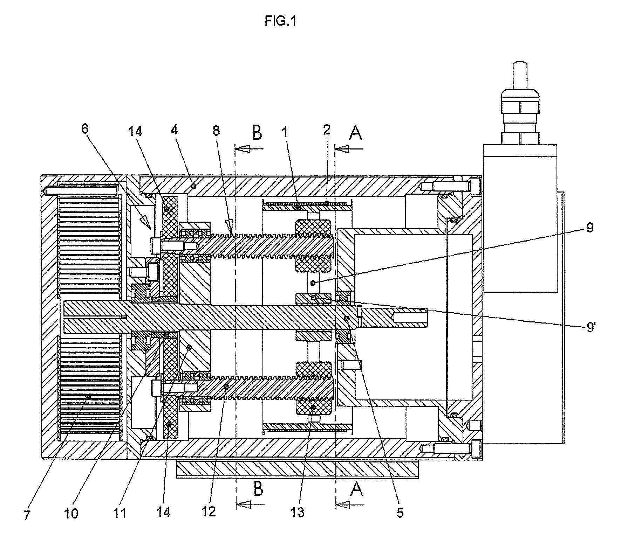

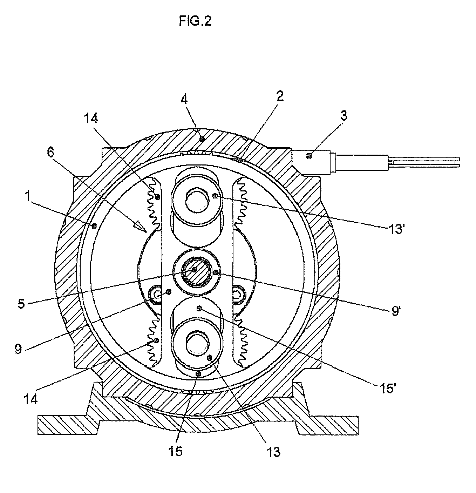

Les figures 1 à 3 des dessins annexés représentent, à titre d'exemple, un dispositif d'entraînement pour capteur à câble, qui est essentiellement constitué par un tambour 1 d'enroulement d'un câble 2 guidé hors du carter par l'intermédiaire d'une sortie de câble fixe 3 (figure 2), ledit tambour d'enroulement 1 étant monté dans un carter de protection 4 et guidé dans ce dernier sur un arbre 5 d'entraînement d'un capteur (non représenté), par un moyen 6 de solidarisation en rotation du tambour d'enroulement 1 avec l'arbre 5 d'entraînement du codeur, ledit arbre d'entraînement 5 coopérant avec un moyen de rappel 7, et par un moyen 8 d'entraînement du tambour en translation dans le carter 4.

Conformément à l'invention, le tambour 1 est guidé sur l'arbre 5 d'entraînement du codeur par l'intermédiaire d'un flasque 9 faisant partie du moyen 6 de solidarisation en rotation du tambour 1 avec l'arbre 5 d'entraînement du codeur et est relié à ce moyen 6 de solidarisation en rotation par l'intermédiaire du moyen 8 d'entraînement du tambour 1 en translation dans le carter 4, ledit moyen 8 d'entraînement en translation coopérant, d'une part, avec le flasque 9 du tambour 1 et, d'autre part, avec un élément fixe 10 solidaire du carter 4.

Le moyen 6 de solidarisation en rotation du tambour 1 avec l'arbre 5 d'entraînement du codeur est constitué, d'une part, par le flasque 9, solidaire du tambour 1 et muni d'un manchon coaxial 9' de guidage coulissant sur l'arbre 5 d'entraînement du codeur et, d'autre part, par un bras diamétral 11, solidarisé en rotation avec l'arbre 5 d'entraînement du codeur au moyen d'une goupille 11' ou analogue et relié au flasque 9 par l'intermédiaire de broches d'entraînement 12 coopérant avec des manchons 13 guidés dans ledit flasque 9. Ainsi, une sollicitation en rotation du tambour 1, par traction sur le câble 2, aura pour effet de faire tourner ledit tambour 1 sur l'arbre 5 d'entraînement du codeur, en étant guidé par son manchon coaxial 9' et d'entraîner simultanément en rotation, par l'intermédiaire des manchons 13 et des broches d'entraînement 12 coopérant avec ces derniers, le bras diamétral 11 solidarisé en rotation avec l'arbre 5 d'entraînement du codeur par la goupille 11' et donc ledit arbre d'entraînement 5 contre l'action du moyen 7 de rappel de l'arbre d'entraînement 5. Au relâchement de cette traction sur le câble 2, le moyen 7 de rappel de l'arbre d'entraînement 5 provoque un mouvement inverse du tambour 1.

Le moyen 8 d'entraînement du tambour 1 en translation dans le carter 4, est avantageusement constitué, d'une part, par les broches d'entraînement 12, du moyen 6 de solidarisation en rotation du tambour 1 avec l'arbre 5 d'entraînement du codeur, coopérant avec les manchons 13 guidés dans le flasque 9 du tambour 1 et, d'autre part, par l'élément fixe 10 solidaire du carter 4, cedit élément fixe 10 coopérant avec des moyens 14 solidaires en rotation des broches d'entraînement 12, qui sont guidées en rotation dans le bras diamétral 11 solidarisé en rotation avec l'arbre d'entraînement 5.

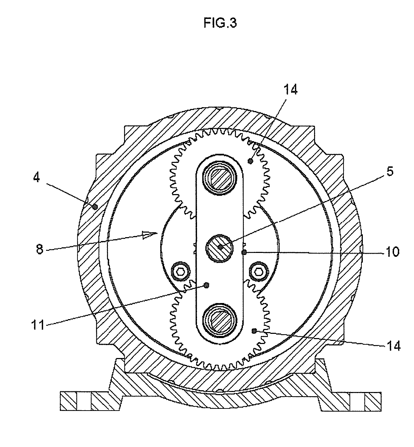

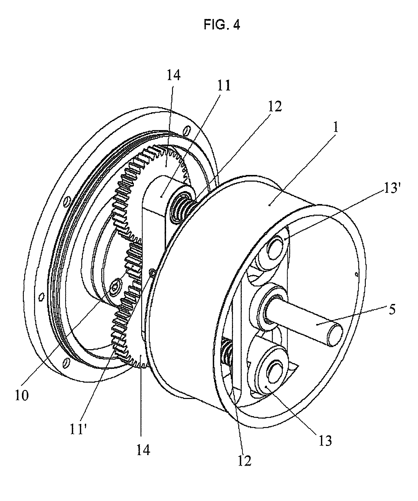

Les broches d'entraînement 12 sont avantageusement sous forme de tiges filetées qui sont fixées en rotation, à une extrémité guidée dans le bras diamétral 11 sur les moyens 14, leur extrémité opposée coopérant avec un taraudage correspondant prévu dans les manchons 13 guidés dans le flasque 9. Les moyens 14 sont avantageusement sous forme de roues dentées et coopèrent avec l'élément fixe 10, qui est sous forme d'un pignon correspondant (figures 3 et 4).

Les manchons 13 présentent avantageusement chacun deux méplats 13' (figure 2) destinés à coopérer avec les faces latérales de trous oblongs 15 prévus dans le flasque 9, ces trous oblongs étant pourvus à une de leurs extrémités, de préférence à l'extrémité la plus proche du manchon coaxial 9', d'une ouverture 15' de section agrandie permettant le montage des manchons 13, lors de l'assemblage du dispositif conforme à l'invention.

Ainsi, lorsque le tambour 9 est entraîné en rotation par traction sur le câble 2, la rotation simultanée du bras diamétral 11, comme expliqué plus haut, entraîne une rotation correspondante des moyens 14 sous forme de roues dentées par coopération avec le pignon formant le moyen fixe 10. Il en résulte que les broches 12 sont entraînées de manière correspondante, de sorte que leur coopération avec la taraudage prévu dans les manchons 13 entraîne un vissage ou un dévissage correspondant dans lesdits manchons 13. Cette action de vissage ou de dévissage provoque un déplacement longitudinal du tambour 1 par l'intermédiaire du flasque 9 qui est entraîné par les manchons 13, le bras diamétral 11 portant les moyens 14 étant fixes en translation sur l'arbre d'entraînement 5. Le déroulement du câble 2 du tambour 1 ou son enroulement sur ce dernier peut donc s'effectuer avec une juxtaposition précise des spires, sans chevauchement.

Le dispositif conforme à l'invention permet donc d'effectuer un contrôle précis d'un déplacement linéaire par l'intermédiaire d'un codeur rotatif, ce en assurant une parfait réversibilité des mouvements et en particulier du câble d'entraînement du codeur.

En outre, les mouvements de déplacements simultanément rotatifs et en translation du tambour 2 peuvent être contrôlés de manière extrêmement précise, ce en mettant en oeuvre des dispositifs de constitution relativement simple.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif d'entraînement pour capteur à câble, essentiellement constitué par un tambour (1) d'enroulement d'un câble (2) guidé hors du carter par l'intermédiaire d'une sortie de câble fixe (3), ledit tambour d'enroulement (1) étant monté dans un carter de protection 4 et guidé dans ce dernier sur un arbre (5) d'entraînement d'un capteur, par un moyen (6) de solidarisation en rotation du tambour d'enroulement (1) avec l'arbre (5) d'entraînement du codeur, ledit arbre d'entraînement (5) coopérant avec un moyen de rappel (7), et par un moyen (8) d'entraînement du tambour en translation dans le carter (4), **caractérisé en ce que** le tambour (1) est guidé sur l'arbre (5) d'entraînement du codeur par l'intermédiaire d'un flasque (9) faisant partie du moyen 6 de solidarisation en rotation du tambour (1) avec l'arbre (5) d'entraînement du codeur et est relié à ce moyen (6) de solidarisation en rotation par l'intermédiaire du moyen (8) d'entraînement du tambour (1) en translation dans le carter (4), ledit moyen (8) d'entraînement en translation coopérant, d'une part, avec le flasque (9) du tambour (1) et, d'autre part, avec un élément fixe (10) solidaire du carter (4).

2. Dispositif, suivant la revendication 1, **caractérisé en ce que** le moyen (6) de solidarisation en rotation du tambour (1) avec l'arbre (5) d'entraînement du codeur est constitué, d'une part, par le flasque (9), solidaire du tambour (1) et muni d'un manchon coaxial (9') de guidage coulissant sur l'arbre (5) d'entraînement du codeur et, d'autre part, par un bras diamétral (11), solidarisé en rotation avec l'arbre (5) d'entraînement du codeur au moyen d'une goupille (11') ou analogue et relié au flasque (9) par l'intermédiaire de broches d'entraînement (12) coopérant avec des manchons (13) guidés dans ledit flasque (9).

3. Dispositif, suivant l'une quelconque des revendications 1 et 2, **caractérisé en ce que** le moyen (8) d'entraînement du tambour (1) en translation dans le carter (4), est constitué, d'une part, par les broches d'entraînement (12), du moyen (6) de solidarisation en rotation du tambour (1) avec l'arbre (5) d'entraînement du codeur, coopérant avec les manchons (13) guidés dans le flasque (9) du tambour (1) et, d'autre part, par l'élément fixe (10) solidaire du carter (4), cedit élément fixe (10) coopérant avec des moyens (14) solidaires en rotation des broches d'entraînement (12), qui sont guidées en rotation dans le bras diamétral (11) solidarisé en rotation avec l'arbre d'entraînement (5).

4. Dispositif, suivant l'une quelconque des revendications 2 et 3, **caractérisé en ce que** les broches d'entraînement (12) sont sous forme de tiges filetées qui sont fixées en rotation, à une extrémité guidée dans le bras diamétral (11) sur les moyens (14), leur extrémité opposée coopérant avec un taraudage correspondant prévu dans les manchons (13) guidés dans le flasque (9).

5. Dispositif, suivant la revendication 3, **caractérisé en ce que** les moyens (14) sont sous forme de roues dentées et coopèrent avec l'élément fixe (10), qui est sous forme d'un pignon correspondant.

6. Dispositif, suivant l'une quelconque des revendications 2 à 4, **caractérisé en ce que** les manchons (13) présentent chacun deux méplats (13') destinés à coopérer avec les faces latérales de trous oblongs (15) prévus dans le flasque (9), ces trous oblongs étant pourvus à une de leurs extrémités, de préférence à l'extrémité la plus proche du manchon coaxial (9'), d'une ouverture (15') de section agrandie permettant le montage des manchons (13), lors de l'assemblage du dispositif.
